# EUROPEAN PATENT SPECIFICATION

(11) **EP 4 149 283 B1**
(45) Date of publication and mention of the grant of the patent: **11.10.2023**
(21) Application number: 21724698.2
(22) Date of filing: 12.05.2021
(51) Int. Cl.: A23L 27/23

(54) **PEA-DERIVED FLAVOURING MATERIAL**
AUS ERBSEN GEWONNENER AROMASTOFF
MATÉRIAU AROMATISANT DÉRIVÉ DE POIS

(30) Priority: 13.05.2020 EP 20174379
(43) Date of publication of application: 22.03.2023
(73) Proprietor: Unilever IP Holdings B.V., 3013 AL Rotterdam (NL)
(72) Inventor: BATENBURG, Amir Maximiliaan, 3141 JP Maassluis (NL); BOUKAMP, Martina, 49824 Emlichheim (DE); CAMBEEN, Alphonsus Henricus Leonardus, 6708 WH Wageningen (NL); BOUWERS, Jantje, 49824 Emlichheim (DE); WOLL, Karl Ludwig Wendelin, 49824 Emlichheim (DE)
(74) Representative: van den Brom, Coenraad Richard
(86) International application number: PCT/EP2021/062736
(87) International publication number: WO 2021/229005

(56) References cited:
- EP-A1- 1 344 459
- WO-A1-2013/056969
- WO-A2-2014/110532

## Description

### Field of the invention

The present invention relates to a pea-derived flavouring material. More particularly, the invention concerns a pea isolate comprising, calculated by weight of dry matter:
a. 0-10 wt.% of pea components having a molecular weight of at least 30 kDa;
b. 0-70 wt.% galacto-oligosaccharides selected from raffinose, stachyose, verbascose and combinations thereof;
c. 0.05-20 wt.% of 5'-inosine monophosphate (IMP);
d. 0-4 wt.% of 5'-adenosine monophosphate (AMP);
wherein the weight ratio IMP : AMP exceeds 1:1.

The pea isolate can suitably be used as such, or as a component of a flavouring composition, to introduce umami flavour notes into food products or as a flavour enhancer.

The invention also provides a method of preparing a pea isolate, said method comprising the steps of:
a) providing a pea whey containing, calculated by weight of dry matter, less than 10 wt.% starch, less than 10 wt.% of pea globulins, and at least 0.02 wt.% 5'-adenosine monophosphate (AMP); and
b) subjecting the pea whey to ultrafiltration and/or nanofiltration using a filtration membrane having a cut-off of 0.15-60 kDa to produce a filtration permeate;
wherein the pea whey and/or the filtration permeate is subjected to enzymatic treatment with AMP deaminase.

### Background of the invention

Umami is one of the five basic tastes together with sweet, sour, bitter, and salty. Umami is a loanword from the Japanese meaning "pleasant savory taste".

For a long time, scientists debated whether umami was indeed a basic taste; but in 1985 at the first Umami International Symposium in Hawaii, the term Umami was officially recognized as the scientific term to describe the taste of glutamates and nucleotides. Now it is widely accepted as the fifth basic taste. Umami represents the taste of the amino acid L-glutamate and is described as a pleasant "brothy" or "meaty" taste with a long lasting, mouth watering and coating sensation over the tongue. Its fundamental effect is the ability to balance taste and round off the total flavor of a dish. This ability is often referred to as "flavour enhancement". Umami was not properly identified until 1908 by the scientist Kikunae Ikeda. He found that glutamate was responsible for the palatability of the broth from kombu seaweed. He noticed that the taste of kombu dashi was distinct from sweet, sour, bitter and salty and named it umami. Ikeda subsequently patented a process for the industrial production of the monosodium glutamate salt (MSG), which led to the foundation of the Ajinomoto company, who commercialized and popularized MSG.

Later, a disciple of professor Ikeda, Shintaro Kodama, discovered in 1913 that dried bonito flakes contained another umami substance. This was the ribonucleotide IMP. In 1957, Akira Kuninaka realized that the ribonucleotide GMP present in shiitake mushrooms also conferred the umami taste. One of Kuninaka's most important discoveries was the synergistic effect between ribonucleotides and glutamate. When foods rich in glutamate are combined with ingredients that have ribonucleotides, the resulting taste intensity is higher than the sum of the taste intensities of both ingredients.

Many foodstuffs that may be consumed daily are rich in umami. Naturally occurring glutamate can be found in meats, yeast, fungi and vegetables. IMP comes primarily from meats and fish and GMP from mushrooms, fruit and vegetables. Thus, umami taste is common to foods that contain high levels of L-glutamate, IMP and GMP, most notably in fish, shellfish, cured meats, vegetables (e.g. mushrooms, ripe tomatoes, Chinese cabbage, spinach, etc.) green tea, and fermented and aged products (e.g. cheeses, shrimp pastes, soy sauce, etc.). In order to enhance the flavour of foodstuffs it is well-known to add monosodium glutamate (MSG), IMP and GMP. Yeast extracts and hydrolysed protein are also widely used for this purpose.

Several publications describe the isolation of the umami components from natural sources.

WO 2013/092296 describes a process for preparing a flavour composition having an umami flavour and a MSG content of less than 1 wt% (% weight by total dry matter) comprising the steps of:
- heating vegetable matter (e.g. peas) in water at any given temperature to give cooking water containing flavour-active compounds extracted from the vegetable matter;
- separating the vegetable matter from the cooking water; and
- concentrating the cooking water to provide the flavour composition.

WO 2016/207173 describes a process for preparing a composition containing (5R)-(R-D-glucopyranosyloxy)-l,5-dihydro-2H-pyrrol-2-one in an amount of at least 0.4% (by total dry weight of the composition) for umami taste and/or flavor enhancing of a food product, said process comprising the steps:
- heating green peas or green pea material in water,
- removing solid matter to give an aqueous extract of the peas or pea material, and
- reducing the water content of the extract to form the composition.

WO 2016/207174 describes a process of preparing a tomato derived composition, comprising:
- providing a starting material containing at least 80% by weight of dry matter of one or more tomato derived products selected from tomato paste, tomato juice, tomato serum, tomato pulp and combinations thereof;
- treating the starting material with deaminase to convert at least 30% of the AMP contained therein into IMP.

The deaminase treatment improves the taste contribution of these tomato products.

It is also known to isolate components from peas using ultrafiltration.

US 2012/0121741 describes a method for preparing a water-soluble defructosylated pea extract. Example 1 describes a process in which flocculatable proteins, insoluble fibers and/or starch of a pea flour were removed to obtain a water-soluble pea extract. This extract was diluted, filtered by means of an ultrafiltration membrane with a cutoff of 5,000 Da, followed by a concentration of the ultrafiltrate by reverse osmosis and treatment of concentrate with invertase.

US 2015/0368293 describes a method for treating pea soluble fractions, comprising:
- a step of microfiltration or centrifugation of said soluble fractions resulting in a microfiltration permeate or a centrifugation supernatant,
- followed by a step of ultrafiltration of the microfiltration permeate or of the centrifugation supernatant, resulting in an ultrafiltration permeate and an ultrafiltration retentate,
- followed by an optional step of reverse osmosis of the ultrafiltration permeate resulting in a permeate and a retentate from the reverse osmosis.

It is known to convert 5'-adenosine monophosphate (AMP) into 5'-inosine monophosphate (IMP), using AMP-deaminase.

WO 2013/056969 describes a process of preparing a tomato derived composition, comprising:
- providing a starting material containing at least 80% by weight of dry matter of one or more tomato derived products selected from tomato paste, tomato juice, tomato serum, tomato pulp and combinations thereof;
- treating the starting material with deaminase to convert at least 30% of the 5'AMP contained therein into 5'IMP.

### Summary of the invention

The inventors have developed a method that enables the isolation of a valuable flavouring material from an effluent stream that is produced in the manufacture of pea protein isolates. Pea protein isolates are produced by a process that comprises the steps of (i) preparing a pea puree, (ii) removing starch and fibres, and (iii) removing protein (globulins). The aqueous effluent stream that is obtained after the removal of starch, fibres and globulins is commonly referred to as 'pea whey'. Pea whey contains a variety of components, including free amino acids, sugars, organic acids, nucleotide monophosphates, galacto-oligosaccharides, polysaccharides, peptides, proteins (e.g. albumins) and minerals.

In accordance with the present invention, a pea isolate is prepared using this pea whey as starting material. The method of preparing this pea isolate comprises the step of subjecting the pea whey to ultrafiltration (UF) and/or nanofiltration (NF) using a filtration membrane having a cut-off of 0.15-60 kDa to produce a filtration permeate, and the step of subjecting the pea whey or the UF/NF permeate to enzymatic treatment with AMP deaminase.

The inventors have found that UF/NF permeate obtained in this method is rich in 5'-adenosine monophosphate (AMP) and that treatment with AMP deaminase effectively converts AMP into 5'-inosine monophosphate (IMP), a highly potent umami component. Thus, the present method yields an isolate from pea whey that can suitably be used as a flavouring ingredient in the preparation of edible products that imparts umami flavour notes and/or that acts as a flavour enhancer. The isolate may be subjected to further process steps to produce a more concentrated product and/or to remove off-flavours, sugars and/or inorganic salts. Examples of such further process steps include evaporation (to remove volatile components), reverse osmosis, chromatography contacting with adsorbent etc.

The present invention provides a unique pea isolate comprising, calculated by weight of dry matter:
a. 0-10 wt.% of pea components having a molecular weight of at least 30 kDa;
b. 0-70 wt.% galacto-oligosaccharides selected from raffinose, stachyose, verbascose and combinations thereof;
c. 0.05-40 wt.% of 5'-inosine monophosphate (IMP);
d. 0-4 wt.% of 5'-adenosine monophosphate (AMP);
wherein the weight ratio IMP : AMP exceeds 1:1.

The invention also relates to particulate flavouring compositions containing the aforementioned pea isolate.

The invention further provides a process of preparing a food product, said process comprising combining the pea isolate or flavouring composition of the present invention with one or more other edible ingredients

### Detailed description of the invention

Accordingly, a first aspect of the invention relates to a pea isolate comprising, calculated by weight of dry matter:
a. 0-10 wt.% of pea components having a molecular weight of at least 30 kDa;
b. 0-70 wt.% galacto-oligosaccharides selected from raffinose, stachyose, verbascose and combinations thereof;
c. 0.05-20 wt.% of 5'-inosine monophosphate (IMP);
d. 0-4 wt.% of 5'-adenosine monophosphate (AMP);
wherein the weight ratio IMP : AMP exceeds 1:1.

The words 'comprising' and 'containing' as used herein should not be interpreted restrictively as meaning 'consisting of'. In other words, besides the features listed after these words, non-listed features may be present.

Unless specified otherwise, numerical ranges expressed in the format 'from x to y' or `x-y' are understood to include x and y. When for a specific feature multiple preferred ranges are described in the format 'from x to y' or `x-y', it is understood that all ranges combining the different endpoints are also contemplated. For the purpose of the invention ambient temperature is defined as a temperature of about 20°C.

Unless indicated otherwise, weight percentages (wt.%) are based on the total weight of the composition.

The term "pea whey" as used herein refers to the aqueous pea isolate that is obtained after removal of the majority of the starch, fibre and globulins that are naturally present in pea.

The term "food product" as used herein refers to an edible product that is suitable for consumption by humans.

As understood by the skilled person, the requirement that the weight ratio IMP : AMP exceeds 1:1 means that in case the AMP concentration equals 0 wt.%, the IMP concentration can be anything within the range specified, i.e. 0.05-20 wt.%, calculated by weight of dry matter.

The pea isolate of the present invention advantageously contains a considerable amount of IMP. Preferably, the pea isolate contains, calculated by weight of dry matter, at least 0.06 wt.%, more preferably 0.08-5 wt.% and most preferably 0.1-3 wt.% of IMP.

The AMP content of the pea isolate preferably does not exceed 1 wt.%, calculated by weight of dry matter. More preferably, calculated by weight of dry matter, the AMP content does not exceed 0.5 wt.%, most preferably it does not exceed 0.2 wt.%. Typically, the AMP content of the pea isolate is at least 0.001 wt.%, calculated by weight of dry matter.

According to an especially preferred embodiment of the present invention, the pea isolate contains IMP and (optionally) AMP in a weight ratio IMP:AMP that exceeds 2:1, more preferably a weight IMP:AMP that exceed 3:1 and most preferably a weight ratio IMP:AMP that exceeds 5:1. Typically, the weight ratio IMP:AMP does not exceed 50:1.

The benefits of the present invention are particularly appreciated if the pea isolate is derived from peas that have a low content of 5'-guanosine monophosphate (GMP). Preferably, the pea isolate contains, calculated by weight of dry matter, 0-2 wt.%, more preferably 0-1 wt.% and most preferably 0-0.5 wt.% of GMP.

The pea isolate of the present invention may suitably be prepared by a method that comprises enzymatic conversion of AMP into IMP, using a suitable deaminase, such as AMP deaminase. In a preferred embodiment of the invention, the pea isolate contains AMP deaminase in active and/or inactive form. Most preferably, AMP deaminase is present in inactive form.

In a particularly preferred embodiment, the pea isolate has been treated to remove off-flavour components such as n-hexanal and/or dimethyl sulphide.

Preferably, the pea isolate contains not more than 4 µg hexanal per kg of dry matter, more preferably not more than 3 µg hexanal per kg of dry matter and most preferably not more than 2 µg hexanal per kg of dry matter.

Isosuccinimide β-glucoside is a metabolite of pea seedlings that is typically present in the pea isolate of the present invention. Preferably, the pea isolate contains, calculated by weight of dry matter, at least 0.0001 wt.%, more preferably at least 0.001 wt.% and most preferably 0.004-0.1 wt.% of isosuccinimide β-glucoside.

The pea isolate of the present invention preferably comprises, calculated by weight of dry matter, 2 - 20 wt.%, more preferably 2.5 - 10 wt.% and most preferably 3 - 6 wt.% of free amino acids. Here the term 'free amino acid' also encompasses salts of amino acids. The wt.% of free amino acids in the pea isolate is calculated assuming that the free amino acids are present in fully protonated from.

The protein content of the pea isolate, calculated by weight of dry matter, preferably is in the range of 0-10 wt.%, more preferably in the range of 0-8 wt.% and most preferably in the range of 0-6 wt.%. Here the term "protein refers to a polypeptide containing a chain of at least 20 amino acids.

In accordance with a preferred embodiment, the composition contains free amino acids and protein in a weight ratio of at least 0.5:1, more preferably of at least 0.8:1 and most preferably of at least 1:1. The weight ratio is calculated assuming that both the free amino acids and the proteins are present in fully protonated form.

The glutamate content of the pea isolate, calculated by weight of dry matter, preferably is in the range of 0.5-4 wt.%, more preferably in the range of 0.7-3 wt.% and most preferably in the range of 0.8-2 wt.%. Here the term 'glutamate' encompasses both glutamic acid and salts of glutamic acid. The glutamate concentration is calculated assuming that all glutamate is present as glutamic acid.

The pea isolate of the present invention typically comprises, calculated by weight of dry matter 0-30 wt.% sucrose, more preferably 5 - 25 wt.% sucrose and most preferably 10 - 20 wt.% sucrose.

The combination of oligosaccharides, free amino acids and sucrose typically constitutes at least 20 wt.% of the dry matter that is contained in the pea isolate. More preferably, said combination constitutes at least 30 wt.% and most preferably at least 35 wt.% of the dry matter that is contained in the pea isolate.

Pea components having a molecular weight of at least 30 kDa (e.g. proteins and polysaccharides) preferably constitute not more than 8 wt.%, more preferably not more than 5 wt.% and most preferably not more than 2 wt.% of the dry matter in the pea isolate.

In a particularly preferred embodiment, the pea isolate contains, calculated by weight of dry matter, not more than 10 wt.% more preferably not more than 8 wt.% and most preferably not more than 5 wt.% of pea components having a molecular weight of at least 10 kDa.

According to a further preferred embodiment, the pea isolate comprises, calculated by weight of dry matter, 0-50 wt.% galacto-oligosaccharides, more preferably 5-40 % galacto-oligosaccharides, most preferably 8-35 wt.% galacto-oligosaccharides selected from raffinose, stachyose, verbascose and combinations thereof.

The starch content of the pea isolate, calculated by weight of dry matter, preferably is in the range of 0-5 wt.%, more preferably in the range of 0-3 wt.% and most preferably in the range of 0-2 wt.%.

A preferred pea isolate comprises, calculated by weight of dry matter 0-3 wt.% of phytate, more preferably0.2-2 wt.% of phytate and most preferably0.4-1.5 wt.% of phytate. Here the term 'phytate' encompasses both phytic acid and salts of phytic acid. The phytate concentration is calculated assuming that all phytate is present as phytic acid.

Preferably, at least 80 wt.%, more preferably at least 90 wt.%, even more preferably at least 95 wt.% and most preferably at least 99 wt.% of the dry matter contained in the pea isolate is derived from peas.

The pea isolate of the present invention preferably is in the form of a powder, a granulate, a liquid or a paste. Most preferably, the pea isolate is in the form of a powder or a granulate.

In accordance with a preferred embodiment, the pea isolate has a water content of not more than 15 wt.%, more preferably of not more than 10 wt.% and most preferably of not more than 7 wt.%.

In accordance with another embodiment, the pea concentrate is a liquid, having a water content of 20-90 wt.%, more preferably of 30-85 wt.% and most preferably of 40-80 wt.%.

According to a preferred embodiment, the pea isolate of the present invention is obtained by a method in which pea derived material, preferably an isolate of pea whey, is treated with AMP deaminase to convert endogenous AMP into IMP.

According to another preferred embodiment, the present pea isolate is obtained by a method in which pea whey is subjected to ultrafiltration or nanofiltration, using a filtration membrane having a cut-off of 0.15-60 kDa, to produce a filtration permeate. The filtration membrane used preferably has a cut-off in the range of 0.5-20 kDa, more preferably in the range of 1-15 kDa and most preferably in the range of 1.5-5 kDa.

Preferably, the pea whey and/or the filtration permeate is subjected to enzymatic treatment with AMP deaminase.

According to a particularly preferred embodiment, the pea isolate is obtained by the preparation method described herein below.

Another aspect of the invention relates to a dried flavouring composition having a water content of not more than 15 wt.%, said dried flavouring composition comprising, calculated by weight of dry matter 30-80 wt.% of the pea isolate according to the present invention and 10-70 wt.% of carrier. The dried flavouring composition of the present invention may suitably be prepared by a process comprising:
- providing a pea isolate having a dry matter composition as described herein before, said pea isolate having a water content of 40-90 wt.%;
- combining 100 parts by weight of the pea isolate with 25 to 250 parts by weight of carrier to produce a premix; and
- drying the premix, preferably by spray drying, freeze drying, belt drying or fluid bed drying.

The carrier that is applied in the dried flavouring composition is preferably selected from starch, modified starches (e.g. maltodextrin), sugars (e.g maltose), gums (e.g. gum Arabic, ghatti gum, karaya gum, traganth), sodium chloride and combinations thereof. According to a particularly preferred embodiment, the carrier originates from pea (e.g. pea starch or pea maltodextrin).

According to a particularly preferred embodiment, the dried flavouring composition consists of a combination of the pea isolate and carrier.

A further aspect of the invention relates to a particulate flavouring comprising
(i) 10-80 wt.% of the pea isolate of the present invention, said pea isolate being a powder or a granulate having a water content of not more than 15 wt.%;
   or
   15-80 wt.% of the dried flavouring composition of the present invention; and
(ii) 20-90 wt.% of other particulate ingredients.

This particulate flavouring may suitably be prepared by dry blending of the pea isolate or the dried flavouring composition with the other particulate ingredients.

Yet another aspect of the invention relates to a process of preparing a food product, said process comprising combining the pea isolate of the present invention (optionally in the form of the dried flavouring composition or the particulate flavouring) with one or more other edible ingredients.

In accordance with a preferred embodiment of the process, 100 parts by weight of the one or more other edible ingredients are combined with 1 to 100 parts by weight, more preferably 2-50 parts by weight and most preferably 5-20 parts by weight of the pea isolate.

In accordance with another preferred embodiment of the process, 100 parts by weight of the one or more other edible ingredients are combined with 1 to 100 parts by weight, more preferably 3-60 parts by weight and most preferably 8-30 parts by weight of the flavouring composition.

The pea isolate of the flavouring composition is preferably combined with the one or more edible ingredients in an amount sufficient to introduce 5-5000 mg IMP per kg of food product, more preferably 8-3000 mg IMP per kg of food product and most preferably10-2000 mg IMP per kg of food product.

Food products that can suitably be prepared using the pea isolate or the flavouring composition of the present invention include savoury products, more preferably savoury products selected from soups, sauces, gravies, bouillons, seasonings, crisps, snacks, vegetable flakes, flours and flour mixes, meat products, vegetarian meat substitutes, milk products, vegetarian substitutes of milk products, vegetarian egg substitutes and dried/powdered eggs. Most preferably the food product is selected from soups, sauces, gravies, bouillons, seasonings, crisps and snacks.

A further aspect of the invention pertains to the food product that is obtained by the aforementioned process.

In a preferred embodiment, the food product is a solid food product comprising a pea isolate, said food product comprising:
a. 0-0.5 wt.% of pea components having a molecular weight of at least 30 kDa;
b. 1-30 wt.% galacto-oligosaccharides selected from raffinose, stachyose, verbascose and combinations thereof;
c. 0.005-2 wt.% of IMP;
d. 0-0.4 wt.% of AMP;
wherein the weight ratio IMP : AMP exceeds 1:1.

Examples of solid food products include powders, granulates, flakes and shaped products (e.g. cubes).

Preferably, solid food product of the present invention is a solid savoury food product. Examples of solid savoury food products include dry soups, dry sauces, dry seasoning, bouillon powders and bouillon cubes. According to a particularly preferred embodiment thereof, the solid food product is a particulate savoury product, most preferably a particulate savoury product selected from dry soups, dry sauces and dry seasoning.

In a preferred embodiment, the solid food product has a water content of less than 15 wt.%, more preferably of less than 10 wt.%.

In another advantageous embodiment, the food product is a liquid or paste, having a water content of 20-90 wt.%, more preferably of 40-85 wt.%, most preferably of 50-80 wt.%.

Preferably, the liquid or pasty food product is a savoury food product selected from sauces, soups, gravies, bouillons and condiments.

The food product of the present invention preferably contains, 1-50 wt.%, more preferably 2-35 wt.% and most preferably 5-25 wt.% of dry matter from pea isolate.

In a preferred embodiment, the food product contains not more than 3 wt.%, more preferably not more than 1 wt.% and most preferably not more than 0.5 wt.% of pea components having a molecular weight of at least 30 kDa.

The aforementioned galacto-oligosaccharides are preferably contained in the food product in a concentration of 2-20 wt.%, more preferably of 3-15 wt.% and most preferably of 4-12 wt.%.

The IMP content of the food product preferably is in the range of 0.01-1.5 wt.%, more preferably in the range of 0.02-1 wt.% and most preferably in the range of 0.03-0.5 wt.%.

The AMP content of the food product is preferably in the range of 0-0.3 wt.%, more preferably in the range of 0-0.1 wt.% and most preferably in the range of 0-0.05 wt.%.

IMP and the optional component AMP are preferably present in the food product in a weight ratio IMP : AMP that exceeds 2:1, more preferably exceeds 3:1 and most preferably exceeds 5:1. Typically, the weight ratio IMP : AMP does not exceed 50:1.

The food product preferably contains 0-1 wt.% more preferably 0-0.5 wt.% and most preferably 0-0.2 wt.% of GMP.

Isosuccinimide β-glucoside is preferably contained in the food product in a concentration of at least 0.3 mg/kg, more preferably of at least 1 mg/kg and most preferably of at least 5 mg/kg.

The invention further relates to the use of the pea isolate of the present invention as a flavour enhancer in a flavouring composition or an edible product.

In one embodiment of the aforementioned use, the pea isolate is used as a flavour enhancer in a dried flavouring composition in a concentration, calculated by weight of dry matter, of 30-80 wt.%, said dried flavouring having a water content of not more than 15 wt.%.

In another embodiment, the pea isolate has a water content of not more than 15 wt.% and is used as a flavour enhancer in a particulate flavouring composition in a concentration, calculated by weight of dry matter, of 10-80 wt.%.

In yet another embodiment, the pea isolate is applied as a flavour enhancer in an edible product. Preferably, said use comprises combining of one or more other edible ingredients with 1 to 100 parts by weight of the pea isolate.

Yet another aspect of the present invention relates to a first method of preparing a pea isolate, said method comprising the steps of:
a) providing a pea whey containing, calculated by weight of dry matter, less than 3 wt.% starch, less than 10 wt.% of pea globulins, and at least 0.02 wt.% 5'-adenosine monophosphate (AMP); and
b) subjecting the pea whey to ultrafiltration and/or nanofiltration using a filtration membrane having a cut-off of 0.15-60 kDa to produce a filtration permeate;
wherein the pea whey and/or the filtration permeate is subjected to enzymatic treatment with AMP deaminase.

In an embodiment of this first method the pea whey is subjected to ultrafiltration or nanofiltration using a filtration membrane having a cut-off of 0.15-60 kDa to produce a filtration permeate.

The filtration membrane that is employed in the first method preferably has a cut-off in the range of 0.5-20 kDa, more preferably in the range of 1-15 kDa and most preferably in the range of 1.5-5 kDa.

In a particularly preferred embodiment of the first method, the filtration permeate is subjected to enzymatic treatment with AMP deaminase. The treatment with AMP deaminase preferably converts at least 50%, more preferably at least 70% and most preferably at least 80% of the AMP into IMP.

It was found that a very clean tasting pea isolate can be produced by the first method if the filtration permeate is contacted with a polymeric adsorbent. Accordingly, in a preferred embodiment, the filtration permeate is contacted with a polymeric adsorbent before or after the enzymatic treatment, most preferably after the enzymatic treatment. Examples of polymeric adsorbent that may be employed include polystyrene/divinylbenzene resins, phenol formaldehyde resins and combinations thereof. In a preferred embodiment the polymeric adsorbent employed is a polystyrene/divinylbenzene resin. Particularly preferred are the resins Amberlite XAD 761, Amberlite FPX 68, Diaion HP 20, Sepabeads SP 70, Purosorb PAD 550 and .

The filtration permeate may be contacted with the polymeric adsorbent by combining the permeate with the adsorbent so as to allow the adsorbent to bind off-flavour substances, and by subsequently separating the permeate from the adsorbent. Alternatively, the permeate may be contacted with the adsorbent by passing a stream of permeate through a bed of adsorbent, e.g. through a column filled with adsorbent.

The contacting with the polymeric adsorbent preferably removes at least 50%, more preferably at least 80% and most preferably at least 90% of the hexanal that is contained in the filtration permeate.

A very clean tasting pea isolate can also be produced by the first method if the pea whey is subjected to nanofiltration prior to the ultrafiltration step that produces the filtration permeate. It is believed that low molecular weight off-flavour components and/or low molecular weight precursors of off-flavour components can be effectively removed in the nanofiltration step. This may be achieved by subjecting the pea whey to a nanofiltration step following which the nanofiltration retentate is subjected to ultrafilration to produce the filtration permeate.

The nanofiltration membrane that is employed prior to ultrafiltration in the aforementioned embodiment of the present method preferably has a cut-off in the range of 0.15-0.50 kDa, more preferably in the range of 0.17-0.40 kDa and most preferably in the range of 0.18-0.35 kDa.

A further aspect of the invention relates to a second method of preparing a pea isolate, said method comprising the steps of:
a) providing a pea whey containing, calculated by weight of dry matter, less than 3 wt.% starch, less than 10 wt.% of pea globulins, and at least 0.02 wt.% 5'-adenosine monophosphate (AMP); and
b) subjecting the pea whey to ultrafiltration using an ultrafiltration membrane having a cut-off of 1-60 kDa to produce an ultrafiltration permeate;
c) subjecting the ultrafiltration permeate to nanofiltration using a nanofiltration membrane having a cut-off of 0.15-0.50 kDa to produce nanofiltration retentate;
wherein the pea whey and/or the ultrafiltration permeate and/or the nanofiltration retentate is subjected to enzymatic treatment with AMP deaminase.

The ultrafiltration membrane that is employed in the second method preferably has a cut-off of 2-30 kDa, more preferably in the range of 4-20 kDa and most preferably in the range of 5-15 kDa.

The nanofiltration membrane that is employed in the second method preferably has a cut-off of 0.16-0.45 kDa, more preferably in the range of 0.17-0.40 kDa and most preferably in the range of 0.18-0.35 kDa.

In a particularly preferred embodiment of the second method, the nanofiltration retentate is subjected to enzymatic treatment with AMP deaminase. The treatment with AMP deaminase preferably converts at least 50%, more preferably at least 70% and most preferably at least 80% of the AMP into IMP.

The first and second method of the present invention preferably produce a pea isolate as described herein before.

The pea whey that is used as a starting material in the present method is preferably obtained from peas belonging to the genus *Pisum sativum.* More preferably, the pea whey is obtained from one of the following pea varieties: *Pisum sativum L. convar. speciosum* (field pea), *Pisum sativum L. convar. Sativum* (yellow pea) and *Pisum sativum L. convar. medullare* (wrinkled pea).

The pea whey that is employed in the present methods preferably has a water content of at least 50 wt.%, more preferably a water content of 70-98 wt.% and most preferably a water content of 80-95 wt.%.

In another preferred embodiment, the pea whey has a pH in the range of 6 to 8.

According to a particularly preferred embodiment, the pea whey contains AMP and IMP in a weight ratio AMP:IMP of at least 1:1, more preferably of at least 3:1 and most preferably of 5:1.

The pea whey employed in the present methods preferably has a pH in the range of 5.5 to 7.5 when it is subjected to the AMP deaminase treatment. By ensuring that the pH of the pea whey is within this pH range before the ultrafiltration or nanofiltration, removal of phytate can maximised. Removal of phytate is preferred as phytate tends to precipitate at pH above 5. Since many savoury food products have a pH of 5.5 to 7 and precipitation of phytate during manufacture, storage or consumption of food products is unwanted, removal of this component is advantageous.

Removal of phytate before or during ultrafiltration or nanofiltration can be aided by adding a water-soluble metal salt, e.g. a water-soluble calcium salt, prior to ultrafiltration or nanofiltration and allowing the phytate to form an insoluble phytate salt with the metal cation at a pH of at least 5, preferably at a pH in the range of 5.5 to 7.5. Examples of calcium salts that may be employed include calcium chloride, calcium acetate and combinations thereof.

Phytate may also be removed by treatment with phytase.

The present methods may suitably comprise additional purification steps to as to achieve enrichment of IMP. This may be achieved, for instance, by means of ion exclusion chromatography, which separates uncharged compounds like sugars and (galactose)oligosaccharides from free amino acids and nucleotides.

Galacto-oligosaccharides may also be separated from IMP by means of membrane separation.

The methods of the present invention preferably comprises one or more steps to reduce water content. Reduction of water content may be achieved by concentration (e.g. vacuum evaporation and/or reverse osmosis), optionally followed by drying (e.g. spray drying, freeze drying or drum drying). According to a particularly preferred embodiment, the present methods comprises the step of spray drying the enzyme treated filtration permeate or the enzyme treated nanofiltration retentate.

The pea whey that is employed as a starting material in the present methods is preferably obtained by a process comprising the steps of:
- preparing a pea puree by (i) comminuting fresh peas, optionally adding aqueous liquid, (ii) comminuting rehydrated peas or (iii) comminuting dried peas, followed by rehydration;
- removing starch and fibres from the puree to produce a de-starched supernatant; and
- removing pea globulins from the de-starched supernatant using thermal coagulation at a pH close to the iso-electric point (IEP) or isoelectric precipitation.

Both the thermal coagulation and/or the isoelectric precipitation are preferably carried out at a temperature between 60-120°C.

Coagulated pea globulins may suitably be removed from the de-starched supernatant by means of centrifugation, decanting or filtration. Most preferably, the coagulated pea globulins are removed by centrifugation.

The present invention is further illustrated by the following non-limiting examples.

### Examples

### Example 1

Pea whey concentrate was produced as follows: Pea flour was mixed with tap water in a weight ratio of 1:3 and stirred for 1 hr at ambient temperature, followed by centrifugation at 3000 G for 10 minutes. The supernatant was brought to pH 5.2 by addition of concentrated sulphuric acid and heated to 95-100 degrees C. Subsequently, the formed slurry was cooled to 70 degrees C and subjected to 10 minutes centrifugation at 3000 G. The supernatant was concentrated to 25-30% dry matter by means of a vacuum evaporator, operated at around 65-85 degrees C.

The composition of the pea whey concentrate (dry matter content 28 wt.%) as analysed via quantitative NMR and elemental analysis is shown in Table 1. NMR analysis using targeted profiling (Chenomx) was performed according to SOP 890 V1 (Quantitative NMR in food systems). 1D ¹H NMR spectra were recorded with a NOESYGPPR1D pulse sequence on a Bruker Avance III 600 NMR spectrometer, equipped with a 5-mm cryo-probe. The probe was tuned to detect ¹H resonances at 600.25 MHz. The internal probe temperature was set to 298K. 128 scans were collected in 57k data points with a relaxation delay of 10 seconds, an acquisition time of 4 seconds and a mixing time of 100 ms. Low power water suppression (16 Hz) was applied for 0.99 seconds. The data were processed in TOPSPIN software version 3.5 pl 1 (Bruker BioSpin GmbH, Rheinstetten, Germany). An exponential window function was applied to the free induction decay (FID) with a line-broadening factor of 0.15 Hz prior to the Fourier transformation. Manual phase correction and baseline correction was applied to all spectra. The spectra were referenced against the methyl signal of TSP (δ 0.0 ppm). The 1D ¹H NMR spectra were imported in Chenomx software (Chenomx NMR Suite Professional v8.13, Edmonton, Alberta, Canada). The relevant Chenomx models were fitted into the NMR signals of the target compounds, minimising the residual line. The in-house (Matlab based) reporting module calculates the compound concentration in the sample in three different units, i.e. %w/w, mg/g and mg

**Table 1**

| | **% by weight of dry matter** |
|---|---|
| Nucleotide monophoshates | 0.19 |
| Free amino acids | 3.1 |
| Bound amino acids (TAA - FAA) | 21.5 |
| Sugars (mono- and disaccharides)¹ | 12.9 |
| Galacto-oligosaccharides | 22.0 |
| Starch | 0.7 |
| Polysaccharides (other than starch) | 1.5 |
| Fat | 0.18 |
| Nucleosides² | 0.15 |
| Organic acids³ | 9.6 |
| Minerals⁴ | 10.5 |
| Unknown | Remainder |

| | |
|---|---|
| ¹ Galactose, glucose, sucrose, myo-inositol (fructose could not be quantified due to overlapping NMR signals) ² Guanosine, inosine and uridine ³ Sum of acetate, citrate, formate, fumarate, lactate, malate, 2-oxoglutarate, proprionate, pyroglutamate, pyruvate and succinate ⁴ Sum of Ca, K, Na, Mg and PO₄ (as based on P content) | |

About 585 grams of pea whey concentrate was 1.7x diluted with milliQwater and centrifugated for 15 minutes with about 18700 RCF to remove insolubles. Next, about 520 g of supernatant was filtered using two ultrafiltration membranes, a first one with a cut-off of 30 kDa (Minimate^{™} TFF Capsule with Omega 30kDa Membrane (OA030C12, Pall)) and a second one with a cut-off of 1 kDa (Minimate^{™} TFF Capsule with Omega 1kDa Membrane (OA001C12, Pall)). The permeate of the first ultrafiltration membrane was used as the feed for the second one.

About 220 g of the permeate so obtained was adjusted to pH 6.4 with 10% potassium hydroxide solution. AMP deaminase (Deamizyme^{™} T, ex Amano Enzyme) was added in a concentration of 0.003% followed by heating to 50°C. After keeping the temperature for 4 hours at 50°C, the solution was heated to 80°C and kept at that temperature for at least 10 minutes to deactivate the enzyme, and subsequently cooled in ice water. Samples were taken before and after the process to monitor the enzymatic conversion. The results are these analyses are shown in Table 2.

**Table 2**

| | **mg/g** | |
|---|---|---|
| | **0 hour** | **4 hours** |
| AMP | 0.23 | 0.00 |
| IMP | 0.00 | 0.18 |

The enzyme-treated permeate was treated with a resin (Amberlite^{®} FPX68) to remove most of the color and the aroma. Previously, the resin had been pre-treated as follows: 50 g of resin was added to 100ml of milliQ water, shaken for 2 minutes and left for some minutes to deposit. The water layer was decanted, and its conductivity measured. This washing was repeated until the conductivity of the water layer was < 60 µS/cm.

About 200 g of enzyme-treated permeate was mixed with 20g of resin (Amberlite^{®} FPX68) in a conical flask. Within about 1 hour the sample with resin was three times shaken for 2 minutes and after centrifugation (10 minutes with 10400 RCF at room temperature) about 200 grams of de-aromatised pea isolate was obtained. The recovery of the IMP after the resin treatment was found to be >85%

The composition of the de-aromatised pea isolate as measured via NMR, as described above, total nitrogen analysis and elemental analysis is shown in Table 3.

**Table 3**

| | **% by weight of dry matter** |
|---|---|
| IMP | 0.16 |
| AMP | <0.01 |
| GMP | 0.03 |
| Glutamate | 1.26 |
| Phytate | 1.03 |
| Free amino acids (incl. glutamate) | 4.0 |
| Protein⁵ | 5.5 |
| Sugars (mono- and disaccharides)¹ | 16.6 |
| Galacto-oligosaccharides | 27.6 |
| Nucleosides² | 0.08 |
| Organic acids (incl. phytate)³ | 14.3 |
| Minerals⁴ | 13.4 |

| | |
|---|---|
| ¹ Galactose, glucose, sucrose, myo-inositol (fructose could not be quantified due to overlapping NMR signals) ² Guanosine, inosine and uridine ³ Sum of acetate, citrate, formate, fumarate, lactate, malate, 2-oxoglutarate, phytate, proprionate, pyroglutamate, pyruvate and succinate ⁴ Sum of Ca, K, Na, Mg and PO4 (as based on P content) 5 Calculated as Nx6.25 - Free amino acids; N = total nitrogen according to Dumas | |

### Example 2

Example 1 was repeated on a larger scale (starting from 3200 g of pea whey - prepared as in Example 1). Furthermore, this time the enzyme-treated UF permeate was de-aromatised via elution over a column filled with Amberlite^{®} FPX68 resin.

The column had been prepared by introducing 50g of wet Amberlite^{®} FPX68 resin into a glass column with 2 cm internal diameter (16 cm bed height). Dropwise and without pressure 440 g of the enzyme treated permeate was passed through this column within 4 hours to produce 430 grams of de-aromatised flavour composition. The recovery of the IMP after the column passage was found to be 94%.

About 250 g of the de-aromatised pea isolate was two times diluted with demineralised water and freeze dried, after which 52 g of dried powder was collected.

Both the liquid pea isolate (Sample 1) and the powder version (Sample 2) were added to a chicken bouillon at a concentration of 6.6 wt.% dry matter per liter.

The pea isolates were evaluated by a highly trained panel of twelve subjects against a blanc (Blanco), in a model chicken bouillon base from which taste enhancers and sucrose had been omitted. The model bouillon contained palm fat flakes, chicken flavourings, salt, onion powder, riboflavin and caramel colourant, as well as citric acid acidulant. Bouillon bases containing 0.1 wt.% mono sodium glutamate (MSG) or 0.3 wt.% Standard-18 yeast extract (YE) from BioSpringer were used as reference samples; to these samples sucrose was added up to the level present in the samples with pea isolates. The pH of all samples was brought to 6.5 and the salt level to 0.5 wt.%.

In a first step the panel ranked the five samples in order of increasing umami intensity, and in a second step the panel rated the samples on a 15-points scale, using five citric acid references for (absolute) intensity scaling: score 2 (0.25 g/L citric acid), 4 (0.4 g/L), 7 (0.6 g/L), 10 (0.8 g/L) and 13 (1.0 g/L).

Besides umami taste two other attributes were measured on the same samples via the same procedure: 'thick tongue' (-mouthfeel) and 'chicken flavour' (to measure enhancement). The panel had been trained in ranking and scoring using aqueous monosodium glutamate solutions of different concentration. During the session the panelists could clean their palate with cream crackers, cucumber and water. At the start of the session reference samples were presented, containing 0.5 g/l and 2.0 g/l, respectively, of monosodium glutamate (MSG) in water, defined as 3 and 8 respectively on the umami scale. Evaluations were performed in triplicate in individual booths, with 60 mL samples presented at 60 °C.

The results of the panel evaluation are summarised in Table 4.

**Table 4**

| **Sensory attribute** | **Blanco** | **MSG** | **YE** | **Sample 1** | **Sample 2** |
|---|---|---|---|---|---|
| Umami | 1.43 | 5.00 | 2.54 | 3.35 | 3.60 |
| Chicken | 1.19 | 4.74 | 1.43 | 3.12 | 3.44 |
| Thick tongue | 1.39 | 4.44 | 2.29 | 3.06 | 3.31 |

### Example 3

Example 2 was repeated, except that ultrafiltration was performed on a 25 % dry-matter pea whey concentrate with a Minikros Hollow fiber module 3kDa mPES Membrane (S04-E003-05-N, Spectrum Labs), operating at 4 °C. 4.4 liter permeate was obtained in 36hours. 0.5 kg of the permeate was subjected directly to adsorption on an Amberlite FPX68 column (15x2cm), another 1.1 kg of permeate was first brought to pH 6.5 with KOH and treated with 30 mg deaminase. 0.5 kg of the deaminase treated permeate was subsequently subjected to the adsorption on the Amberlite FPX68 column. Samples were taken after every processing step, resulting in the following set of samples:

| | |
|---|---|
| Isolate 1: | UF permeate |
| Isolate 2: | UF permeate, deaminase treated |

| | |
|---|---|
| Isolate 3: | UF permeate, Amberlite treated |
| Isolate 4: | UF permeate, deaminase and Amberlite treated |

The concentration of one key volatile off-flavour compound (hexanal) was measured in these isolates by means of SPME-GCMS, as shown in table 5. GCMS was performed on samples extracted via headspace-SMPE with a 65 µm PDMS/DVB fibre (Supelco #57293-U), using an Agilent 7890A GC instrument equipped with a Restek Rxi-5ms column (20 m length, 0.18 mm Internal diameter, Film thickness of 0.36 µm) in combination with an Agilent 5974C inert MSD detector.

**Table 5**

| | **Hexanal (ppb)** |
|---|---|
| Isolate 1 | 17.4 |
| Isolate 2 | 5.0 |
| Isolate 3 | 1.0 |
| Isolate 4 | <0.5 |

The composition of isolate 4 as determined via NMR is shown in Table 6.

**Table 6**

| | **% by weight of dry matter** |
|---|---|
| IMP | 0.07 |
| AMP | <0.01 |
| GMP | 0.02 |
| Glutamate | 1.25 |
| Phytate | 0.95 |
| Free amino acids (incl. glutamate) | 4.0 |
| Sugars (mono- and disaccharides)¹ | 19.9 |
| Galacto-oligosaccharides | 29.6 |
| Nucleosides² | 0.15 |
| Organic acids (incl. phytate)³ | 12.4 |

| | |
|---|---|
| ¹ Galactose, glucose, sucrose, myo-inositol (fructose could not be quantified due to overlapping NMR signals) ² Guanosine, inosine and uridine ³ Sum of acetate, citrate, formate, fumarate, lactate, malate, 2-oxoglutarate, phytate, proprionate, pyroglutamate, pyruvate and succinate | |

The umami impact of aforementioned pea isolates 1 to 4 was assessed by an expert panel comprising six experienced panelists. Each of the pea isolates was added to a chicken bouillon base (40 g/L) from which taste enhancers and sucrose had been omitted to compensate for the sugars present in the pea isolates. Total salt level of the bouillon samples so obtained was standardized to 0.5 g/L and pH was adjusted to 6.5 by addition of a few drops of a KOH or HCl solution. As a reference a chicken bouillon base containing 2 g/L added sucrose was used.

Thus, the following samples were assessed:

| | |
|---|---|
| Reference: | bouillon base containing 2g/L sucrose |
| Sample 1: | bouillon base containing 40 g/L of pea isolate 1 |
| Sample 2: | bouillon base containing 40 g/L of pea isolate 2 |
| Sample 3: | bouillon base containing 40 g/L of pea isolate 3 |
| Sample 4: | bouillon base containing 40 g/L of pea isolate 4 |

Individual panelists compared all samples and scored the samples on the attributes "umami taste", "mouthfeel" and "chicken taste". Each panelist could make comments, followed by discussion with the team. To keep the samples on temperature (50-60°C) during tasting, samples were offered on a heating plate.

All bouillon samples containing added pea isolate were found to have a stronger umami taste than the reference sample. All panelists found sample 4 to have the strongest umami taste. A pea flavour note was detected in samples 2 and 3. The results of the sensory evaluation are summarized in Table 7.

**Table 7**

| ***Sample*** | ***Remarks*** |
|---|---|
| Reference | Weak salty taste, slightly chicken. |
| 1 | Umami, slight pea taste, green, vegetable taste. |
| 2 | Compared to sample (1) more umami and more chicken. |
| 3 | Compared to sample (1) more umami and more chicken. Compared to sample (2) less pea taste. |
| 4 | Most umami, most chicken and no pea taste, more long-lasting taste. |

### Example 4

The 5'-ribonucleotide composition of the whey produced from a range of peas (yellow peas and wrinkled peas) was investigated. Pea flour obtained by milling of the various pea cultivars was mixed with tap water in a weight ratio of 1:3 and stirred for 1 hr at ambient temperature, followed by centrifugation at 3000 G for 20 minutes. The supernatant was brought to pH 5.2 by addition of 5% sulphuric acid and heated to 100-110 degrees C. Subsequently, the slurry was cooled to 70 degrees C and subjected to 20 minutes centrifugation at 3000 G. The supernatants (wheys) were analysed with quantitative NMR, as described in example 1, giving the results shown in Table 8. The dry matter content of these wheys ranged from 5 to 6 wt.%

**Table 8**

| **Compound** | **mg / g whey** | | |
|---|---|---|---|
| | **Commercial pea mix** | **Alvesta** | **Tristar** |
| AMP | 0.07 | 0.10 | 0.15 |
| GMP | 0.00 | 0.01 | 0.03 |
| IMP | 0.00 | 0.00 | 0.00 |
| Glutamate | 0.54 | 0.48 | 0.61 |
| Sucrose | 9.17 | 9.69 | 12.88 |

### Example 5

Pea whey was produced in the same way as described in Example 1, except that after centrifugation the supernatant was not concentrated. The pea whey so obtained had a pH of 6.51 and dry matter content of 2.8 wt.%.

The pea whey was pasteurised for 6 minutes at 80°C. Next, the pasteurised pea whey was subjected to a nanofiltration step using a SeIRO^{®} NF MPC-34 composite nanofiltration membrane (MW cut-off: 200 Daltons, 3.8"diameter, max. pressure 20 bar, flow rate 63-96 l/hr), ex Koch Membrane Systems. The retentate so obtained had a pH of 6.33 and a dry matter content of 14.2 wt.%.

The pea whey feed and the nanofiltration retentate were analysed to determine the effect of the nanofiltration on the concentrations of a number of off-flavour substances. The results are shown in Table 9.

**Table 9**

| | **Change in concentration** |
|---|---|
| Acetoin | -87% |
| Hexanal | -70% |
| Nonanal | -86% |

These analytical results show that these off-flavour components were effectively removed by the nanofiltration step.

The nanofiltration retentate was diluted with RO water (1:4) following which the diluted retentate was subjected to an ultrafiltration step using a Sani-Pro HFK ultrafiltration membrane having a molecular weight cut-off of 10 kDa (MW cut-off: 10 kDa), ex Koch Membrane Systems. The ultrafiltration permeate so obtained had a pH of 5.5 and a dry matter content of 2.7 wt.%.

Deaminase (Deamizyme 50000G:, ex Amano Enzyme) was added to the ultrafiltration permeate in a concentration of 0.025 wt.%, after pH had been adjusted to pH 6.2, followed by incubation at 50°C for 4 hours. After incubation, the enzyme was inactivated by heating to 80°C to 10 minutes. Subsequently, the deaminase treated ultrafiltration permeate was concentrated in an evaporator to a dry matter content of approximately 25 wt.%, followed by spray drying (Tᵢₙ 145°C, Tₒᵤₜ 85°C). The spray dried powder so obtained had a dry matter content of 96.8 wt.%.

The composition of the spray dried powder so obtained is shown in Table 10.

**Table 10**

| | **% by weight** |
|---|---|
| IMP | 0.06 |
| AMP | <0.01 |
| GMP | <0.01 |
| Glutamate | 1.29 |
| Pyroglutamate | 0.07 |
| Arginine | 0.77 |
| Fructose | <0.01 |
| Glucose | 0.3 |
| Sucrose | 17.5 |
| Water | 3.2 |

## Claims

1. A pea isolate comprising, calculated by weight of dry matter:
a. 0-10 wt.% of pea components having a molecular weight of at least 30 kDa;
b. 0-70 wt.% galacto-oligosaccharides selected from raffinose, stachyose, verbascose and combinations thereof;
c. 0.05-20 wt.% of 5'-inosine monophosphate (IMP);
d. 0-4 wt.% of 5'-adenosine monophosphate (AMP);
wherein the weight ratio IMP : AMP exceeds 1:1.

2. Pea isolate according to claim 1, wherein the pea isolate comprises, calculated by weight of dry matter, at least 0.0001 wt.% of isosuccinimide β-glucoside.

3. Pea isolate according to claim 1 or 2, wherein the pea isolate comprises not more than 4 µg hexanal per kg of dry matter.

4. Pea isolate according to any one of the preceding claims, wherein the pea isolate comprises, calculated by weight of dry matter, 2-20 wt.% of free amino acids.

5. Pea isolate according to any one of the preceding claims, wherein the combination of oligosaccharides, free amino acids and sucrose constitutes at least 20 wt.% of the dry matter that is contained in the pea isolate.

6. Pea isolate according to any one of the preceding claims, wherein the pea isolate has a water content of not more than 15 wt.%.

7. A dried flavouring composition having a water content of not more than 15 wt.%, said dried flavouring composition comprising, calculated by weight of dry matter 30-80 wt.% of the pea isolate according to any one of claims 1-5 and 10-70 wt.% of carrier.

8. A particulate flavouring composition comprising:
i) 10-80 wt.% of the pea isolate according to claim 6 or 15-80 wt.% of the dried flavouring composition of claim 7; and
ii) 20-90 wt.% of other particulate ingredients

9. A process of preparing an edible product, said process comprising combining the pea isolate according to any one of claims 1-6 or the flavouring composition according to claim 7 or 8 with one or more other edible ingredients.

10. Process according to claim 9, wherein 100 parts by weight of the one or more other edible ingredients are combined with 1 to 100 parts by weight of the pea isolate.

11. A food product that is obtained by a process according to claim 9 or 10.

12. A solid food product comprising a pea isolate, said food product comprising:
a. 0-0.5 wt.% of pea components having a molecular weight of at least 30 kDa;
b. 1-30 wt.% galacto-oligosaccharides selected from raffinose, stachyose, verbascose and combinations thereof;
c. 0.005-2 wt.% of IMP;
d. 0-0.4 wt.% of AMP;
wherein the weight ratio IMP : AMP exceeds 1:1.

13. A solid food product according to claim 12, wherein the solid food product is a particulate savoury product.

14. A method of preparing a pea isolate, said method comprising the steps of:
a) providing a pea whey containing, calculated by weight of dry matter, less than 3 wt.% starch, less than 10 wt.% of pea globulins, and at least 0.02 wt.% 5'-adenosine monophosphate (AMP); and
b) subjecting the pea whey to ultrafiltration and/or nanofiltration using a filtration membrane having a cut-off of 0.15-60 kDa to produce a filtration permeate;
wherein the pea whey and/or the filtration permeate is subjected to enzymatic treatment with AMP deaminase.

15. Method according to claim 14, wherein the filtration permeate is contacted with a polymeric adsorbent before or after the enzymatic treatment.

## Patentansprüche

1. Erbsenisolat, umfassend, berechnet nach Gewicht der Trockenmasse:
a. 0-10 Gew.-% Erbsenbestandteile mit einem Molekulargewicht von mindestens 30 kDa;
b. 0-70 Gew.-% Galactooligosaccharide, ausgewählt Raffinose, Stachyose, Verbascose und Kombinationen davon;
c. 0,05-20 Gew.-% 5'-Inosinmonophosphat (IMP);
d. 0-4 Gew.-% 5'-Adenosinmonophosphat (AMP);
wobei das Gewichtsverhältnis von IMP:AMP 1:1 übersteigt.

2. Erbsenisolat nach Anspruch 1, wobei das Erbsenisolat, berechnet nach Gewicht der Trockenmasse, mindestens 0,0001 Gew.-% Isosuccinimid-β-Glucosid umfasst.

3. Erbsenisolat nach Anspruch 1 oder 2, wobei das Erbsenisolat nicht mehr als 4 µg Hexanal pro kg Trockenmasse umfasst.

4. Erbsenisolat nach irgendeinem der vorhergehenden Ansprüche, wobei das Erbsenisolat, berechnet nach Gewicht der Trockenmasse, 2-20 Gew.-% freie Aminosäuren umfasst.

5. Erbsenisolat nach irgendeinem der vorhergehenden Ansprüche, wobei die Kombination von Oligosacchariden, freien Aminosäuren und Saccharose mindestens 20 Gew.-% der in dem Erbsenisolat enthaltenen Trockenmasse ausmacht.

6. Erbsenisolat nach irgendeinem der vorhergehenden Ansprüche, wobei das Erbsenisolat einen Wassergehalt von nicht mehr als 15 Gew.-% aufweist.

7. Getrocknete Aromazusammensetzung mit einem Wassergehalt von nicht mehr als 15 Gew.-%, wobei die getrocknete Aromazusammensetzung, berechnet nach Gewicht der Trockenmasse, 30-80 Gew.-% Erbsenisolat nach irgendeinem der Ansprüche 1 bis 5 und 10-70 Gew.-% Träger umfasst.

8. Teilchenförmige Aromazusammensetzung, umfassend:
i) 10-80 Gew.-% des Erbsenisolats nach Anspruch 6 oder 15-80 Gew.-% getrocknete Aromazusammensetzung nach Anspruch 7; und
ii) 20-90 Gew.-% andere teilchenförmige Zutaten.

9. Verfahren zur Herstellung eines essbaren Produkts, wobei das Verfahren das Kombinieren des Erbsenisolats nach einem der Ansprüche 1-6 oder der Aromazusammensetzung nach Anspruch 7 oder 8 mit einem oder mehreren anderen essbaren Zutaten umfasst.

10. Verfahren nach Anspruch 9, wobei 100 Gewichtsteile eines oder mehrerer anderer essbarer Zutaten mit 1 bis 100 Gewichtsteilen Erbsenisolat kombiniert werden.

11. Lebensmittelprodukt, das durch ein Verfahren nach Anspruch 9 oder 10 erhalten wird.

12. Festes Lebensmittelprodukt, umfassend ein Erbsenisolat, wobei das Lebensmittelprodukt umfasst:
a. 0-05 Gew.-% Erbsenbestandteile mit einem Molekulargewicht von mindestens 30 kDa;
b. 1-30 Gew.-% Galactooligosaccharide, ausgewählt aus Raffinose, Stachyose, Verbascose und Kombinationen davon;
c. 0,005-2 Gew.-% IMP;
d. 0-0,4 Gew.-% AMP;
wobei das Gewichtsverhältnis IMP:AMP 1:1 übersteigt.

13. Festes Lebensmittelprodukt nach Anspruch 12, wobei das feste Lebensmittelprodukt ein teilchenförmiges schmackhaftes Produkt ist.

14. Verfahren zur Herstellung eines Erbsenisolats, wobei das Verfahren die Schritte umfasst:
a) Bereitstellen einer Erbsenmolke mit einem Gehalt, berechnet nach Gewicht der Trockenmasse, von weniger als 3 Gew.-% Stärke, weniger als 10 Gew.-% Erbsenglobulinen und mindestens 0,02 Gew.-% 5'-Adenosinmonophosphat (AMP); und
b) Unterziehen der Erbsenmolke einer Ultrafiltration und/oder Nanofiltration unter Verwendung einer Filtrationsmembran mit einer Trenngrenze von 0,15-60 kDa, um ein Filtrationspermeat zu erzeugen;
wobei die Erbsenmolke und/oder das Filtrationspermeat einer enzymatischen Behandlung mit einer AMP-Deaminase unterzogen wird.

15. Verfahren nach Anspruch 14, wobei das Filtrationspermeat vor oder nach der enzymatischen Behandlung mit einem polymeren Adsorbtionsmittel in Kontakt gebracht wird.

## Revendications

1. Isolat de pois comprenant, calculé en poids de matière sèche :
a. de 0 à 10 % en poids de composants de pois ayant un poids moléculaire d'au moins 30 kDa ;
b. de 0 à 70 % en poids de galacto-oligosaccharides choisis parmi le raffinose, le stachyose, le verbascose et des combinaisons de ceux-ci ;
c. de 0,05 à 20 % en poids de 5'-inosine monophosphate (IMP) ;
d. de 0 à 4 % en poids de 5'-adénosine monophosphate (AMP) ;
dans lequel le rapport pondéral IMP:AMP est supérieur à 1:1.

2. Isolat de pois selon la revendication 1, dans lequel l'isolat de pois comprend, calculé en poids de matière sèche, au moins 0,0001 % en poids d'isosuccinimide β-glucoside.

3. Isolat de pois selon la revendication 1 ou 2, dans lequel l'isolat de pois ne comprend pas plus de 4 µg d'hexanal par kg de matière sèche.

4. Isolat de pois selon l'une quelconque des revendications précédentes, dans lequel l'isolat de pois comprend, calculé en poids de matière sèche, de 2 à 20 % en poids d'acides aminés libres.

5. Isolat de pois selon l'une quelconque des revendications précédentes, dans lequel la combinaison d'oligosaccharides, d'acides aminés libres et de saccharose constitue au moins 20 % en poids de la matière sèche contenue dans l'isolat de pois.

6. Isolat de pois selon l'une quelconque des revendications précédentes, dans lequel l'isolat de pois a une teneur en eau ne dépassant pas 15 % en poids.

7. Composition aromatisante séchée ayant une teneur en eau ne dépassant pas 15 % en poids, ladite composition aromatisante séchée comprenant, calculé en poids de matière sèche, de 30 à 80 % en poids de l'isolat de pois selon l'une quelconque des revendications 1 à 5 et de 10 à 70 % en poids de véhicule.

8. Composition aromatisante particulaire comprenant :
i) de 10 à 80 % en poids de l'isolat de pois selon la revendication 6 ou de 15 à 80 % en poids de la composition aromatisante séchée selon la revendication 7 ; et
ii) de 20 à 90 % en poids d'autres ingrédients particulaires.

9. Procédé de préparation d'un produit comestible, ledit procédé comprenant la combinaison de l'isolat de pois selon l'une quelconque des revendications 1 à 6 ou de la composition aromatisante selon la revendication 7 ou 8 avec un ou plusieurs autres ingrédients comestibles.

10. Procédé selon la revendication 9, dans lequel 100 parties en poids du ou des autres ingrédients comestibles sont combinées à 1 à 100 parties en poids de l'isolat de pois.

11. Produit alimentaire qui est obtenu par un procédé selon la revendication 9 ou 10.

12. Produit alimentaire solide comprenant un isolat de pois, ledit produit alimentaire comprenant :
a. de 0 à 0,5 % en poids de composants de pois ayant un poids moléculaire d'au moins 30 kDa ;
b. de 1 à 30 % en poids de galacto-oligosaccharides choisis parmi le raffinose, le stachyose, le verbascose et des combinaisons de ceux-ci ;
c. de 0,005 à 2 % en poids d'IMP ;
d. de 0 à 0,4 % en poids d'AMP ;
dans lequel le rapport pondéral IMP:AMP est supérieur à 1:1.

13. Produit alimentaire solide selon la revendication 12, dans lequel le produit alimentaire solide est un produit salé particulaire.

14. Procédé de préparation d'un isolat de pois, ledit procédé comprenant les étapes consistant à :
a) fournir un lactosérum de pois contenant, calculé en poids de matière sèche, moins de 3 % en poids d'amidon, moins de 10 % en poids de globulines de pois et au moins 0,02 % en poids de 5'-adénosine monophosphate (AMP) ; et
b) soumettre le lactosérum de pois à une ultrafiltration et/ou une nanofiltration en utilisant une membrane de filtration ayant un seuil de coupure de 0,15 à 60 kDa pour produire un perméat de filtration ;
dans lequel le lactosérum de pois et/ou le perméat de filtration est soumis à un traitement enzymatique avec de l'AMP désaminase.

15. Procédé selon la revendication 14, dans lequel le perméat de filtration est mis en contact avec un adsorbant polymère avant ou après le traitement enzymatique.
